# EUROPEAN PATENT APPLICATION

(11) **EP 0 878 780 A2**
(43) Date of publication of application: **18.11.1998**
(21) Application number: 98106657.4
(22) Date of filing: 11.04.1998
(51) Int. Cl.: G07C 9/00, G07F 7/10

(54) **User verification system**

(30) Priority: 16.05.1997 GB 9709883
(71) Applicant: NCR INTERNATIONAL INC., Dayton, Ohio 45479 (US)
(72) Inventor: Whytock, Alexander W., Perthshire PH13 9DE (GB)
(74) Representative: Cleary, Fidelma

(57) **Abstract**

The invention relates to a biometric verification system for use e.g. in an ATM (10). When a user wishes to use the ATM, the system scans a biometric feature of the user such as the iris of one of his eyes (32), and produces a diffraction pattern of that feature. The diffraction pattern is compared against a reference matched spatial filter in a Vander Lugt optical correlator (70). If the diffraction pattern and the matched spatial filter match then a correlation dot is produced, and the user is authorized to use the ATM (10).

For a user to be able to use ATMs that comprise this verification system, he has first to use a recording system that produces the reference matched spatial filter of the biometric feature.

## Description

The invention relates to a system for verifying a user and has application, for example, to a system for verifying a user of an automated teller machine (ATM).

At present, it is common practice for a user of an ATM to identify himself by inserting an identification card into the machine and entering his personal identity number (PIN). However, if someone else gains possession of the card and obtains the PIN then they can access the user's account.

Various biometric user verification systems have been developed for providing additional security, but these are computationally intensive resulting in slow processing times. Thus, such known systems have a disadvantage as regards identifying users of ATMs, as short transaction times and large throughput are important to the business of financial institutions.

It is an object of the present invention to provide a biometric user verification system in which the above mentioned disadvantage is alleviated.

According to the present invention there is provided a biometric verification system comprising a scanning means for scanning a biometric feature of a user, characterized by means for producing a diffraction pattern from the biometric feature, and comparing means arranged to compare said diffraction pattern with a stored matched spatial filter.

An embodiment of the present invention will now be described by way of example with reference to the accompanying drawings, in which:-
Fig. 1 is a perspective view of an ATM comprising a biometric verification system in accordance with the invention;
Fig. 2 is a part schematic and part block diagram of a system for forming a reference from a biometric feature that is later to be used in a biometric verification system in accordance with the invention; and
Fig. 3 is a part schematic and part block diagram of the ATM of Fig. 1.

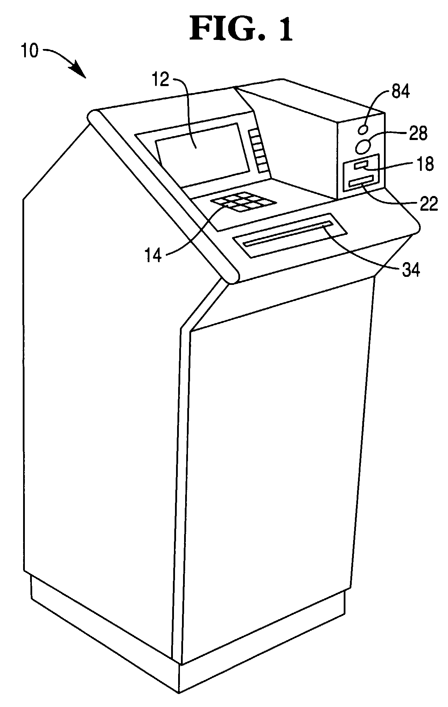

Referring to Figs. 1 and 3, an ATM 10 comprises a display 12 for displaying user information, a key pad 14 for inputting data, a card reader 16 for receiving a user identity card via a card entry slot 18, a receipt printer 20 for printing a receipt of the transaction made by a user and for issuing the receipt to the user via a slot 22, a cash dispensing mechanism 24, and data processing means 26 to which the display 12, the key pad 14, the card reader 16, the receipt printer 20 and the cash dispensing mechanism 24 are connected. In addition, there is connected to the data processing means 26, a digital camera 28 that is used for verifying purposes.

To make a transaction, a user inserts his identification card in the card slot 18. Data contained on the card includes an account number and details of the owner of the account. This data is read by the card reader 16 and is transmitted by the data processing means 26 to a host computer 30 where details of the account and the account holder are stored. The user identifies himself by entering his PIN via the key pad 14. As a further identity check, the user positions himself in front of the digital camera 28 so that the camera 28 can scan a predetermined one of the user's eyes. The camera 28 causes a digital image of the iris of the scanned eye 32 to be recorded. As is known, the iris contains details which are unique to the eye. The data processing means 26 then completes the further identity check in a manner to be described later by accessing reference information in the host computer 30. Once verified, the user implements his financial transaction such as making a cash withdrawal by entering the relevant details on the key pad 14. If a cash withdrawal is requested, then the required amount of cash is presented by the cash dispensing mechanism 24 to the user via a slot 34.

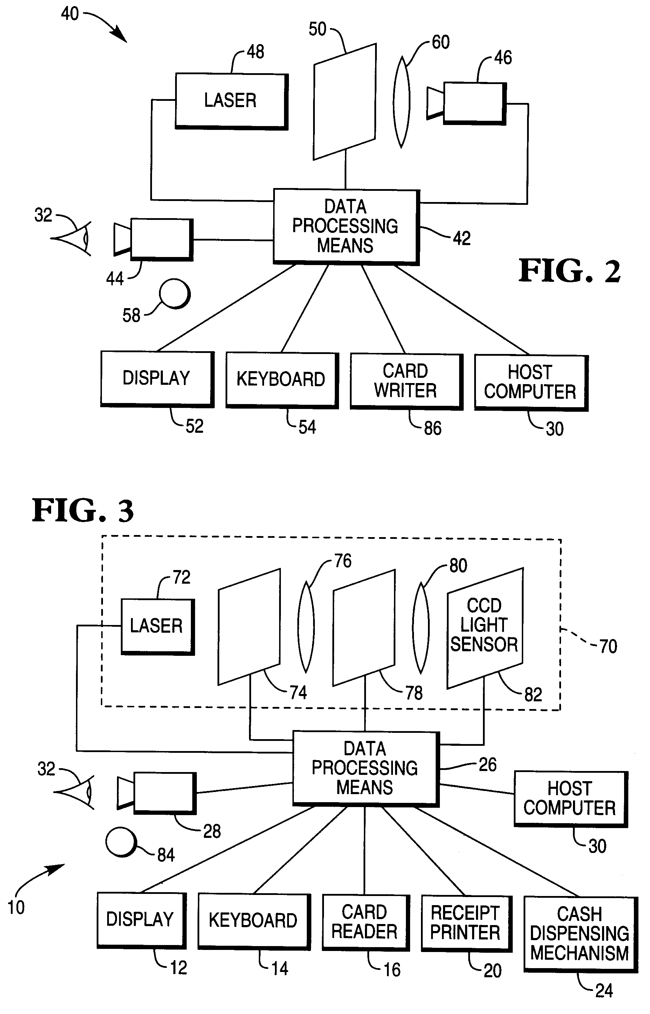

Referring to Fig. 2, a recording system 40 for forming a reference from a biometric feature that is to be later used in the verification process is shown. The system 40 includes a data processing means 42 to which are connected two digital cameras 44,46, a laser 48, a spatial light modulator 50, a display 52 for displaying information, a keyboard 54 for inputting data, and the host computer 30. A spatial light modulator is a transparent liquid crystal display.

A user who wishes to use the ATM 10, will need to have the iris of his appropriate eye 32 initially recorded using the first digital camera 44. To aid the camera 44 in scanning the eye, a sensor (not shown) detects when the eye 56 is in the correct position and causes a light means 58 to illuminate the iris of the eye 32 for the duration that the eye 32 is in the correct position. The image of the iris is stored in the data processing means 42 which causes an optical image of the iris to be displayed on the spatial light modulator 50. Light from the laser 48 passes through the spatial light modulator 50, and a lens 60 focuses the resulting diffraction pattern in a plane known as the Fourier Transform plane where the focused diffraction pattern at this plane is known as a Fourier Transform. This analog Fourier Transform contains the amplitude and the phase information (spatial frequencies) associated with the digitized image. The second digital camera 46 is located at the Fourier Transform plane and serves to record a digital image of the Fourier Transform which is then stored, this image being referred to as a matched spatial filter. How this is used for verification purposes will be described later.

Identifying information of the user is entered via the keyboard 54. The data processing means 42 sends this, along with the matched spatial filter recorded by the second digital camera 46, to the host computer 30 where it is stored in association with details of the user (i.e. the person whose eye 32 has been scanned) and the user's account.

Referring to Fig. 3, the data processing means 26 of the ATM 10 is connected to a Vander Lugt optical correlator 70. The correlator 70 comprises a laser 72, a first spatial light modulator 74, a first lens 76, a second spatial light modulator 78, a second lens 80 and a charge-coupled device (CCD) light sensor 82 spaced along an axis as illustrated.

As previously mentioned, the further, biometric, verification of the user who wishes to use the ATM 10 requires the user to position himself so that one of his eyes (the same eye 32 which was scanned by the recording system 40 of Fig. 2) is scanned by the digital camera 28. To aid the camera 28 in scanning the eye, a sensor (not shown) detects when the eye 32 is in the correct position and causes a light means 84 to illuminate the iris of the eye 32 for the duration that the eye 32 is in the correct position. A digital image of the iris is stored in the data processing means 26 which causes an optical image of the iris to be displayed on the first spatial light modulator 74 contained within the Vander Lugt correlator 70. Light from the laser 72 passes through the first spatial light modulator 74 and by means of the first lens 76 an analog Fourier Transform of the image is produced at the Fourier Transform plane, where the second spatial light modulator 78 is located.

From the details on the identifying card that had been inserted into the card reader 16 as mentioned earlier, the data processing means 26 is able to retrieve from the host computer 30 the digital matched spatial filter of the iris of the user associated with the inserted card and this is displayed on the second spatial light modulator 78 as an optical image.

If the Fourier Transform of the iris scanned by the camera 28 is identical to the matched spatial filter displayed on the second spatial light modulator 78 then a correlation dot is produced at the correlation plane of the correlator 70. Located at the correlation plane is the CCD light sensor 82. This detects whether a correlation dot is produced. If a dot is produced, then as a result of the output from the correlator 70 the data processing means 26 authorizes the user to continue his transaction. If, on the other hand, the Fourier Transform produced at the second spatial light modulator 78 is not the same as the retrieved matched spatial filter, then no correlation dot is produced and the data processing means 26 denies the user access to any financial services of the ATM 10.

The digital cameras 28,44 and 46 used in the recording system 40 and in the ATM 10 must be of & very high resolution.

The advantage of the verification system according to the invention over known biometric verification systems is its improved speed. This is due to the system detecting whether there is a correlation dot or not as opposed to directly comparing a biometric image with a stored image, which is computationally intensive.

An alternative to storing the matched spatial filter of the user's iris in the host computer 30 will now be described. The user's identifying card in this alternative is a smart card and when the recording system 40 produces the matched spatial filter of the user's iris, this is down-loaded via a card writer 84 connected to the data processing means 42 (see Fig. 2) onto the smart card. In order to be used with such smart card, the ATM 10 described with reference to Figs. 1 and 3 would be modified so that the card reader 16 is a smart card reader. When the user wishes to make a financial transaction at the modified ATM 10, he inserts his smart card into the card reader 16 and the stored matched spatial filter is uploaded via the data processing means 26 into the Vander Lugt optical correlator 70.

Although the biometric feature that is recorded and is used for verification is the iris of an eye the invention could easily be adapted for other biometric features such as a fingerprint or the shape of a user's hand.

This system of recording and verification can easily be applied to other situations where verification is required such as for authorizing access to a restricted area.

## Claims

1. A biometric verification system comprising a scanning means (28) for scanning a biometric feature (32) of a user, characterized by means (26) for producing a diffraction pattern from the biometric feature, and comparing means (70) arranged to compare said diffraction pattern with a stored matched spatial filter.

2. A system according to claim 1, characterized in that said comparing means (70) compares said diffraction pattern with said matched spatial filter by correlation.

3. A system according to claim 2, characterized in that said comparing means (70) includes a light sensitive matrix (82) for detecting a correlation dot that is produced when said diffraction pattern and said matched spatial filter match.

4. A system according to claim 3, characterized in that said comparing means (70) comprises a Vander Lugt optical correlator.

5. A system according to any one of the preceding claims, characterized in that a remote data processing means (30) is arranged to store said matched spatial filter.

6. A system according to any one of claims 1 to 4, characterized by a smart card reader (16), and by a smart card arranged to store said matched spatial filter, said smart card being insertable into said card reader in order for said comparing means (70) to access said matched spatial filter.

7. An automated teller machine (10) characterized by a biometric verification system according to any one of the preceding claims.

8. A biometric recording system (40) for producing a matched spatial filter for use in a biometric verification system according to any one of claims 1 to 6, characterized by a first scanning means (44) for scanning a biometric feature (32), a spatial light modulator (50) for providing an optical image of the scanned biometric feature, light means (48) for passing light through said spatial light modulator, focusing means (60) for producing a diffraction pattern of the image displayed on said spatial light modulator, and a second scanning means (46) for recording a matched spatial filter derived from said diffraction pattern.

9. A system according to claim 8, characterized in that said light means (48) is a laser.
